# FASCICULE DE BREVET EUROPEEN

(11) **EP 4 189 811 B1**
(45) Date de publication et mention de la délivrance du brevet: **02.12.2026**
(21) Numéro de dépôt: 21749813.8
(22) Date de dépôt: 27.07.2021
(51) Int. Cl.: H02K 1/27, H02K 21/24

(54) **ROTOR A STRUCTURE COMPOSITE**
ROTOR MIT VERBUNDSTRUKTUR
COMPOSITE-STRUCTURE ROTOR

(30) Priorité: 27.07.2020 FR 2007913
(43) Date de publication de la demande: 07.06.2023
(73) Titulaire: HUTCHINSON, 75008 Paris (FR)
(72) Inventeur: VALEMBOIS, Guy, 31650 LAUZERVILLE (FR); BRETON, Etienne, 31750 ESCALQUENS (FR); FISCHER, Nicolas, 91120 PALAISEAU (FR); RIETSCH, Jean-Christophe, 91100 CORBEIL (FR); JOSEPH, Vincent, 45200 MONTARGIS (FR); BUCHIN Jean-Michel, 39000 LONS LE SAUNIER (FR)
(74) Mandataire: Plasseraud IP
(86) Numéro de dépôt international: PCT/EP2021/070950
(87) Numéro de publication internationale: WO 2022/023314

(56) Documents cités:
- EP-A1- 2 773 023
- FR-A1- 3 033 095
- US-A- 4 864 175
- US-A1- 2006 138 890
- US-A1- 2009 072 639
- US-A1- 2011 006 631
- US-A1- 2020 028 393

## Description

La présente invention a pour objet, dans le domaine des machines électriques à flux axial, un rotor à structure composite, ainsi qu'une machine électrique à flux axial comportant un tel rotor.

On connaît déjà de tels rotors, destinés à une application dans l'automobile, dans la traction d'un véhicule électrique ou hybride, ou autre. Ces rotors font appel aux matériaux composites pour pallier le risque de surchauffe du rotor à aimants permanents, susceptible de perturber les flux magnétiques et de restreindre les performances. Ainsi, les aimants permanents peuvent être noyés dans un matériau composite ou disposés sur un support en matériau composite, éventuellement dans des logements prévus à cet effet, ce qui permet de réduire la masse et donc le phénomène de surchauffe, avec toutefois l'inconvénient d'une moindre résistance du fait des sollicitations dues à la force d'inertie et à la force centrifuge.

Pour remédier à ce problème, il a été proposé d'équiper la périphérie du rotor d'une frette, réalisée en matériau composite renforcées de fibres, permettant de contenir les aimants soumis à la force centrifuge.

Dans un but d'amélioration, et plus particulièrement pour répondre aux problèmes de tenue générés par l'accroissement des vitesses de rotation, il a été proposé dans le document FR 3 027 468 un rotor équipé d'une frette cylindrique constituée d'un enroulement de fibres unidirectionnelles et agencée pour exercer un effort de précontrainte sur les pôles d'aimants sous-jacents, et apte à comprimer les pôles d'aimants sous-jacents en direction de l'élément d'arbre par l'intermédiaire d'inserts disposés entre les pôles d'aimants et l'élément d'arbre.

Si le rotor ainsi conçu a permis de résoudre les problèmes posés à l'époque, il est maintenant dépassé au vu des vitesses de rotation recherchées, auxquelles la frette, malgré sa faible masse, subit la force centrifuge.

On connaît également par le document US 2020/028393 un rotor comprenant une structure composite dans laquelle sont ménagées des alvéoles destinées à loger des aimants. La structure en matériau composite comporte ainsi des logements périphériques chacun apte à contenir des aimants, chacun desdits logements étant délimité, au moins latéralement, par deux éléments radiaux ou sensiblement radiaux et du côté de la périphérie du rotor par une paroi reliant lesdits deux éléments radiaux ou sensiblement radiaux et contre laquelle viennent en appui les aimants par son bord extérieur. De manière avantageuse, la structure composite est constituée d'une résine renforcée de fibres, orientées dans différentes directions. Si une telle structure présente une résistance supérieure, elle n'est toutefois pas optimale, puisque liée à celle de la matrice que constitue la résine.

On connaît également par le document US 2006/138890, un rotor dans lequel chacun des aimants est logé dans un élément en forme de cadre, les éléments en forme de cadre étant ensuite assemblés au moyeu. Les éléments en forme de cadres sont constitués chacun d'une résine renforcée de fibres, et de préférence d'une fibre continue formant une sangle. Une telle construction offre une résistance supérieure à celle proposée dans le document US 2020/028393, mais nécessite la réalisation d'un grand nombre de pièces.

Le document US2009072639 concerne un rotor similaire.

La présente invention a pour but de proposer un rotor à structure composite pour machine électrique à flux axial, qui offre une résistance accrue permettant de répondre aux nouvelles exigences du marché.

Selon l'invention il est proposé un rotor à structure composite, pour machines électriques à flux axial comprenant au moins un stator et un rotor solidaire d'un arbre à entraîner en rotation, conformé en un disque et comportant une pluralité d'aimants permanents portés par un support en matériau composite chacun apte à contenir un aimant, chacun desdits logements étant délimité, au moins latéralement, par deux éléments radiaux ou sensiblement radiaux et du côté de la périphérie du rotor par un segment reliant lesdits deux éléments radiaux ou sensiblement radiaux et contre lequel vient en appui un aimant par son bord extérieur, le rotor étant caractérisé en ce qu'il comporte des moyens d'accrochage répartis périphériquement autour du passage dudit arbre, et en ce que lesdits éléments radiaux ou sensiblement radiaux, de plusieurs logements, voisins ou non, ainsi que les segments qui relient deux à deux lesdits éléments radiaux ou sensiblement radiaux, pour un logement ou plusieurs logements voisins ou non, consistent en au moins une sangle, issue de l'enroulement de fibres continues unidirectionnelles passant entre lesdits aimants, sur le bord extérieur de ceux-ci, ainsi que sur chacun desdits moyens d'accrochage, pour former un maintien collectif des aimants, caractérisé en ce que les moyens d'accrochage sont constitués de pions d'axes parallèles à celui de passage de l'arbre à entraîner, et répartis coaxialement.

L'orientation radiale ou sensiblement radiale des éléments latéraux, est dépendante de la forme des aimants, lesquels ne se présentent pas systématiquement sous la forme de secteurs circulaires, mais peuvent prendre des formes diverses.

Selon une caractéristique additionnelle du rotor selon l'invention, il comporte plusieurs sangles, chacune disposée dans un plan différent et parallèle au plan général du rotor, chacune desdites sangles formant des logements dédiés chacun à un aimant sur deux, les logements de deux sangles adjacentes étant décalés angulairement afin de ne pas loger les mêmes aimants.

Selon une autre caractéristique additionnelle du rotor selon l'invention, il comporte plusieurs sangles, disposées chacune dans un plan différent, parallèle au plan général du rotor, chacune desdites sangles formant des logements dédiés chacun à un groupe d'aimants, les logements de deux sangles adjacentes étant décalés angulairement afin de ne pas loger des groupes d'aimants identiques.

Selon une autre caractéristique additionnelle du rotor selon l'invention, il comporte plusieurs sangles, disposées dans des plans parallèles au plan général du rotor, chacun desdits plans comportant plusieurs sangles formant un logement dédié à un groupe d'aimants, les logements des sangles de deux plans adjacents étant décalés angulairement afin de ne pas loger des groupes d'aimants identiques.

Selon une autre caractéristique additionnelle du rotor selon l'invention, il comporte une frette consistant en un cerclage issu d'un enroulement de fibres continues unidirectionnelles.

La frette peut ne pas être nécessaire, mais lorsque le rotor selon l'invention en comporte une, elle peut être de taille réduite par rapport aux frettes habituellement utilisées.

Les avantages et les caractéristiques du rotor selon l'invention, ressortiront plus clairement de la description qui suit et qui se rapporte au dessin annexé, lequel en représente plusieurs modes de réalisation non limitatifs.

Dans le dessin annexé:
- la figure 1 représente une vue schématique en perspective d'un premier mode de réalisation du rotor selon l'invention,
- la figure 2 représente une vue schématique en perspective d'un autre mode de réalisation du rotor selon l'invention,
- la figure 3 représente une vue schématique en perspective et en éclaté du rotor de la figure 2,
- la figure 4 représente une vue schématique partielle d'un autre mode de réalisation du rotor selon l'invention,
- la figure 5 une vue schématique en perspective et en éclaté du rotor de la figure 4,
- la figure 6 représente une vue schématique en perspective d'une autre mode de réalisation du rotor selon l'invention,
- les figures 7a et 7b représentent une vue schématique partielle d'étapes de fabrication d'un rotor selon l'invention,
- la figure 8 représente une vue schématique partielle d'une autre étape de fabrication d'un autre mode de réalisation du rotor selon l'invention,
- la figure 9 représente une vue schématique partielle, d'une étape de fabrication d'un autre mode de réalisation du rotor selon l'invention,
- les figures 10A et 10B représentent deux vues schématiques partielles, de deux étapes de fabrication d'un autre mode de réalisation du rotor selon l'invention,
- la figure 11 représente une vue schématique partielle d'une étape de fabrication d'u rotor selon l'invention.

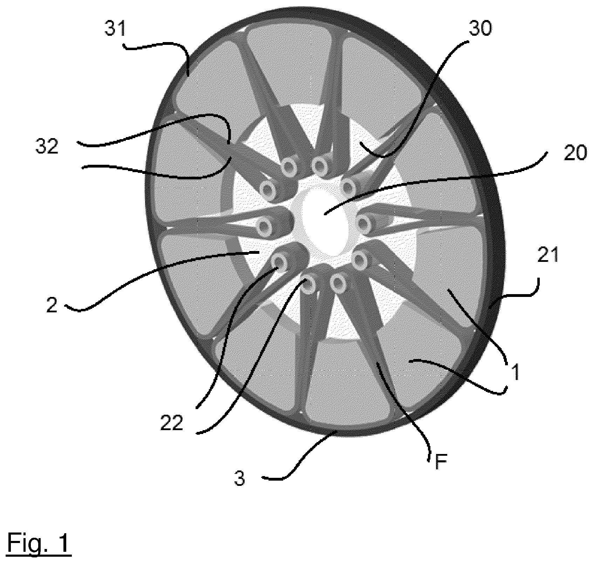

En référence à la figure 1, on peut voir un rotor d'une machine électrique à flux axial selon l'invention.

De manière connue, ce rotor comporte une pluralité d'aimants permanents 1, en l'occurrence en forme de secteurs circulaires, disposés radialement côte-à-côte, sur un support 2 en forme de disque réalisé en un matériau composite, et comportant centralement un trou 20 destiné au passage et à la solidarisation d'un arbre, non représenté, et destiné à être entraîné en rotation axiale. D'autre part, le rotor comporte périphériquement une frette 21 en forme d'anneau.

Selon l'invention, le support 2 comporte, répartis autour du trou 20, une multiplicité de pions 22, d'axes parallèles à celui du trou 20, en l'occurrence, dans ce premier mode de réalisation, en nombre égal à celui des aimants 1, et chacun aligné radialement avec un espace séparant deux aimants 1 voisins.

Du point de vue fabrication, ces pions 22 sont, non limitativement, réalisés en céramique.

Sur cette figure on peut également voir que les aimants 1 sont tous reliés par une sangle 3, qui passe d'une part sur le bord externe de chaque aimant 1, et d'autre part entre chacun des aimants 1, deux fois après avoir fait le tour d'un pion 22. Cette sangle 3 est obtenue par le bobinage d'une fibre de renfort unidirectionnelle F, qui crée des logements 30 délimités chacun en périphérie par une partie 31 en forme d'arc de cercle et par deux branches radiales 32.

Les aimants 1 sont ainsi retenus fermement dans les logements 30, la partie 31 en forme d'arc de cercle, constituant le moyen de blocage et les branches radiales 32 des moyens de retenue.

Il n'est pas nécessaire que le logement soit délimité du côté du trou 20, puisqu'une force ne tend à attirer les aimants 1 en direction de l'arbre, la forme de secteur des aimants et la forme correspondantes des logements 30, étant suffisante au maintien des aimants 1, qui sont également pris dans la matrice constituant le support 2

L'enroulement est de préférence réalisé avec précontrainte, en sorte d'empêcher l'allongement des branches 32 et donc d'immobiliser parfaitement les aimants 1 lors d'une rotation à très haute vitesse.

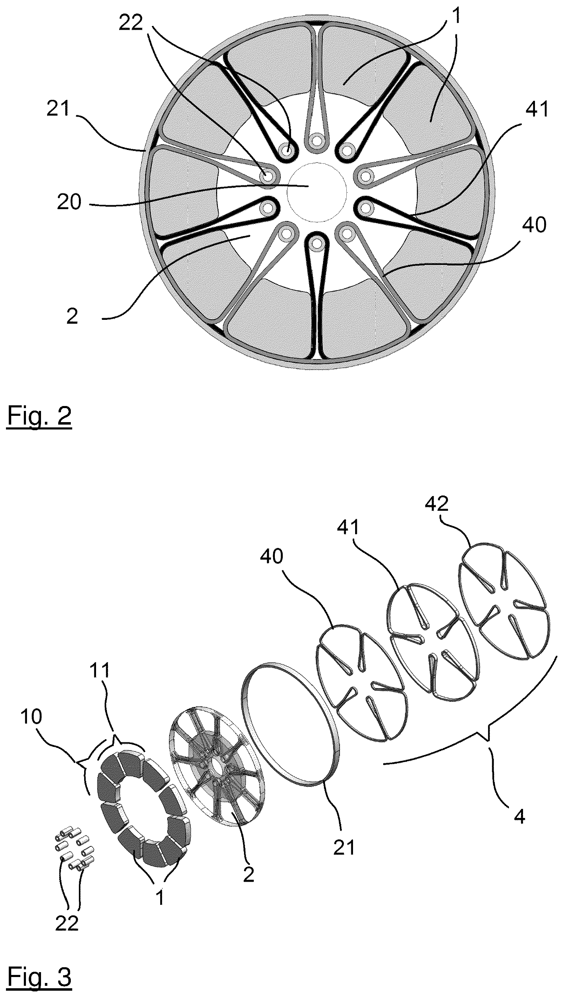

En référence aux figures 2 et 3 on peut voir une variante du rotor selon l'invention, dans laquelle on retrouve un support 2, des pions 22, des aimants 1 en forme de secteur angulaire et une frette 21.

Dans ce mode de réalisation le maintien des aimants 1 est réalisé par un ensemble 4 de trois sangles 40, 41 et 42, disposées dans des plans distincts, parallèles au plan général du rotor. Ainsi, la sangle 41 intérieure est placée entre les deux sangles 40 et 42 extérieures.

La sangle intérieure 41 passe sur un pion 22 sur deux, tandis qu'entre chaque passage sur un pion 22, elle longe radialement un aimant 1, passe périphériquement sur le bord externe d'un groupe 10 de deux aimants 1 voisin, pour rejoindre le pion 22 suivant. Cette sangle 41 enveloppe donc des groupes successifs 10 de deux aimants 1.

La sangle 40 extérieure, est bobinée de manière identique, à l'exception du fait qu'elle passe sur les pions 22 non utilisés par la sangle 41 intérieure, et qu'elle enveloppe des groupes 11 d'aimants 1, constitués de deux aimants 1 provenant chacun de deux groupes 10 voisins.

La sangle 42 extérieure est bobinée de manière identique à la sangle 40 extérieure et enveloppe des groupes 11 d'aimants 1.

Chacun des aimants 1 est donc maintenu individuellement, mais par des sangles disposées dans des plans différents, et décalées angulairement par rapport à la ou les sangles voisines. On notera à ce sujet que le nombre de trois sangles n'est pas limitatif.

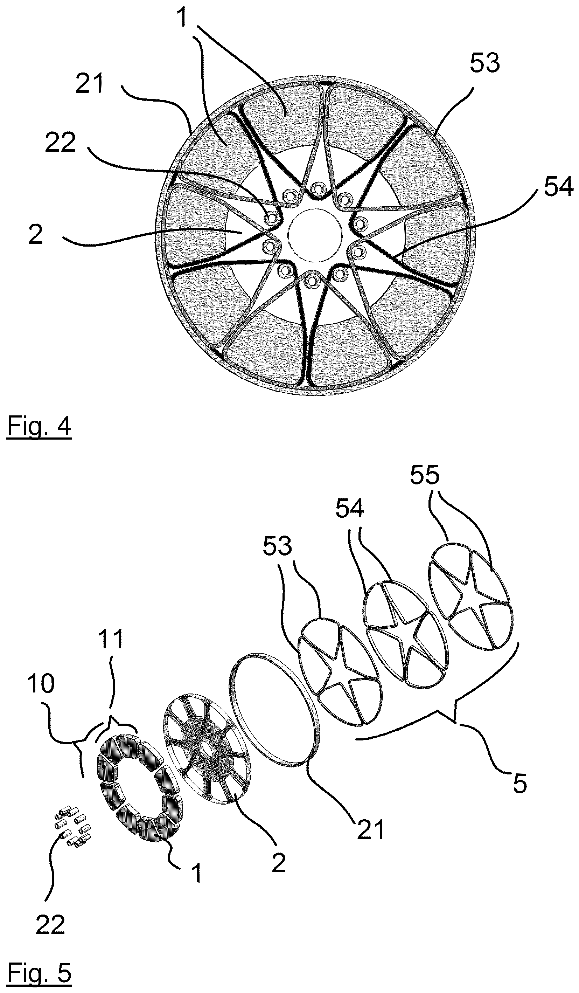

En référence maintenant aux figures 4 et 5, on peut voir une autre variante, dans laquelle on retrouve un support 2, des pions 22, des aimants 1 en forme de secteur angulaire et une frette 21.

Dans ce mode de réalisation le maintien des aimants 1 est réalisé par un ensemble 5 de trois ensembles 50, 51 et 52 de sangles, disposés dans des plans distincts, parallèles au plan général du rotor. Ainsi, l'ensemble 51 intérieur de sangles est placé entre les deux ensembles de sangles 50 et 52 extérieurs.

Chaque ensemble 50, 51 et 52 comprend cinq sangles, respectivement 53, 54 et 55, destinées chacune à envelopper un groupe de deux aimants en passant également autour d'un pion 22.

Chacune des sangles 54 du groupe 51 intérieur enveloppe ainsi des groupes 10 d'aimants 1, tandis que chacune des sangles 50 et 52, enveloppe un groupe 11 d'aimants 1, les groupe 10 et 11 étant, comme dans le mode de réalisation représenté sur les figures 2 et 3, décalés angulairement.

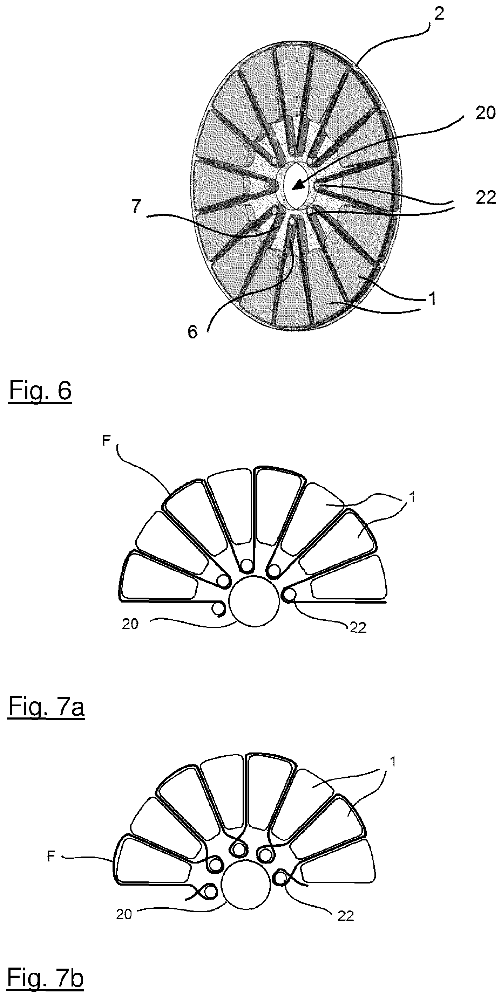

La figure 6 montre un autre mode de réalisation du rotor selon l'invention, dans lequel un aimant 1 sur deux est maintenu individuellement par une sangle 6, venant également d'un enroulement filamentaire de fibres continues unidirectionnelles, tandis que tous les autres aimants 1 sont maintenus collectivement par une seule sangle 7, sur les mêmes pions 22 que les sangles 6, en sorte que le nombre de pions 22 peut être divisé par deux.

Les figures 7a et 7b, montrent différentes façons d'enrouler la fibre autour des aimants 1 et des pions 22.

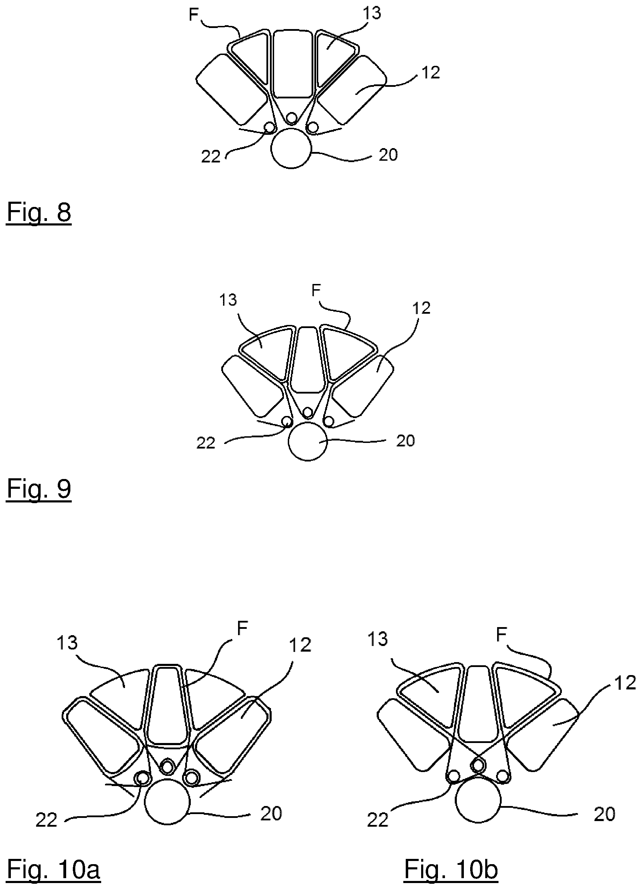

En référence maintenant aux figures 8, 9, 10a et 10b, et 11, on peut voir des étapes de fabrication d'un rotor selon l'invention, par enroulement de fibres F, dans différents cas, non limitatifs, où les aimants 1 présentent des formes autres qu'en secteurs circulaires.

Sur ces figures, le rotor comporte en alternance des aimants 12 de forme rectangulaire ou similaire, et des aimants 13 de forme triangulaire, et on peut voir différentes possibilités d'enroulement d'aimants ou de groupes d'aimants, enroulements superposables en couches par exemple, comme dans les modes de réalisation des modes de réalisation des figures 2 et 4.

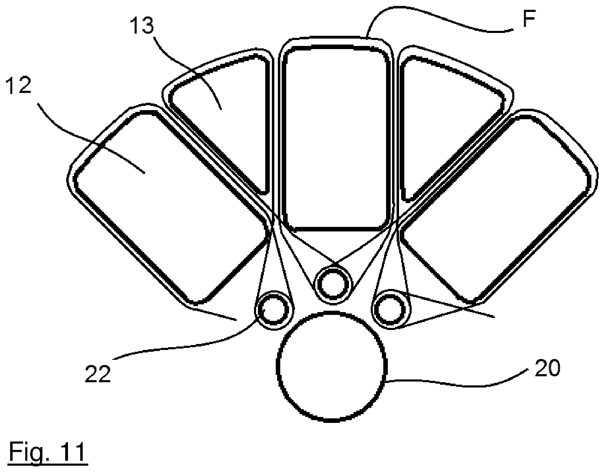

Sur la figure 11, les aimants 12 et 13 sont enroulés avec la même fibre F en bobinant autour des pions 22.

Bien entendu, d'autres combinaisons sont possibles, l'essentiel étant de créer un treillis de fibres F permettant de réaliser une structure apte à contenir les effets de la force centrifuge sur les aimants.

Quel que soit son mode de réalisation, le rotor selon l'invention présente une résistance élevée pour une masse très réduite, et sans risque d'échauffement excessif. Le rotor peut être utilisé avec ou sans frette, et s'il en comporte une, elle peut être de dimensions réduites, et donc de faible masse.

## Revendications

1. Rotor à structure composite, pour machines électriques à flux axial comprenant au moins un stator et un rotor solidaire d'un arbre à entraîner en rotation, conformé en un disque et comportant une pluralité d'aimants permanents (1) portés par un support (2) en matériau composite rendu solidaire dudit arbre à entraîner et constitué d'une matrice renforcée de fibres, ledit support (2) en matériau composite comportant des logements périphériques (30) chacun apte à contenir un aimant (1), chacun desdits logements (30) étant délimité, au moins latéralement, par deux éléments (32) radiaux ou sensiblement radiaux et du côté de la périphérie du rotor par un segment (31) reliant lesdits deux éléments (32) radiaux ou sensiblement radiaux et contre lequel vient en appui un aimant (1) par son bord extérieur, le rotor comporte des moyens d'accrochage (22) répartis périphériquement autour d'un trou destiné au passage (20) dudit arbre, et lesdits éléments (32) radiaux ou sensiblement radiaux, de plusieurs logements (30), voisins ou non, ainsi que les segments (31) qui relient deux à deux lesdits éléments (32) radiaux ou sensiblement radiaux, pour un logement ou plusieurs logements voisins ou non, consistent en au moins une sangle (3 ; 40, 41, 42 ; 53, 54, 55 ; 6, 7), issue de l'enroulement de fibres continues unidirectionnelles (F) passant entre lesdits aimants (1), sur le bord extérieur de ceux-ci, ainsi que sur chacun desdits moyens d'accrochage (22), pour former un maintien collectif des aimants (1), **caractérisé en ce que** les moyens d'accrochage (22) sont constitués de pions d'axes parallèles à celui de passage de l'arbre à entraîner, et répartis coaxialement.

2. Rotor selon la revendication 1, **caractérisé en ce qu'**il comporte plusieurs sangles (40, 41, 42), chacune disposée dans un plan différent et parallèle au plan général du rotor, chacune desdites sangles (40, 41, 42) formant des logements dédiés chacun à un aimant (1) sur deux, les logements de deux sangles adjacentes étant décalés angulairement afin de ne pas loger les mêmes aimants (1).

3. Rotor selon la revendication 1, **caractérisé en ce qu'**il comporte plusieurs sangles (40, 41, 42) disposées chacune dans un plan différent, parallèle au plan général du rotor, chacune desdites sangles (40, 41, 42) formant des logements dédiés chacun à un groupe d'aimants, les logements de deux sangles adjacentes étant décalés angulairement afin de ne pas loger des groupes (10, 11) d'aimants (1) identiques.

4. Rotor selon la revendication 1, **caractérisé en ce qu'**il comporte plusieurs sangles (53, 54, 55), disposées dans des plans parallèles au plan général du rotor, chacun desdits plans comportant plusieurs sangles (53, 54, 55) formant un logement dédié à un groupe d'aimants, les logements des sangles de deux plans adjacents étant décalés angulairement afin de ne pas loger des groupes (10, 11) d'aimants (1) identiques.

5. Rotor selon l'une quelconque des revendications 1 à 4, **caractérisé en ce qu'**il comporte une frette (21) consistant en un cerclage issu d'un enroulement de fibres continues unidirectionnelles.

## Patentansprüche

1. Rotor mit Verbundstruktur für Axialfluss-Elektromaschinen, umfassend mindestens einen Stator und einen Rotor, der fest mit einer drehbar anzutreibenden Welle verbunden, als Scheibe ausgebildet ist und eine Vielzahl von Permanentmagneten (1) aufweist, die von einem Träger (2) aus Verbundwerkstoff getragen werden, der fest mit der besagten anzutreibenden Welle verbunden ist und aus einer faserverstärkten Matrix besteht, wobei der besagte Träger (2) aus Verbundwerkstoff periphere Gehäuse (30) aufweist, die jeweils zur Aufnahme eines Magneten (1) geeignet sind, wobei jedes der besagten Gehäuse (30) zumindest seitlich durch zwei radiale oder im Wesentlichen radiale Elemente (32) und auf der Seite des Umfangs des Rotors durch ein Segment (31) begrenzt ist, das die besagten beiden radialen oder im Wesentlichen radialen Elemente (32) verbindet und an dem ein Magnet (1) mit seiner Außenkante anliegt, wobei der Rotor **dadurch gekennzeichnet ist, dass** er Verankerungsmittel (22) aufweist, die peripher um den Durchgang (20) der besagten Welle verteilt sind, und dadurch, dass die besagten radialen oder im Wesentlichen radialen Elemente (32) mehrerer, benachbarter oder nicht benachbarter Gehäuse (30) sowie die Segmente (31), die die besagten radialen oder im Wesentlichen radialen Elemente (32) für ein Gehäuse oder mehrere benachbarte oder nicht benachbarte Gehäuse paarweise verbinden, aus mindestens einem Gurt (3; 40, 41, 42; 53, 54, 55; 6, 7) bestehen, der aus der Wicklung von endlosen unidirektionalen Fasern (F) hervorgeht, die zwischen den besagten Magneten (1), an deren Außenkante sowie an jedem der besagten Verankerungsmittel (22) verlaufen, um eine gemeinsame Halterung der Magnete (1) zu bilden, **dadurch gekennzeichnet, dass** die Verankerungsmittel (22) aus Stiften mit Achsen bestehen, die parallel zu der des Durchgangs der anzutreibenden Welle sind, und koaxial verteilt sind.

2. Rotor nach Anspruch 1, **dadurch gekennzeichnet, dass** er mehrere Gurte (40, 41, 42) aufweist, die jeweils in einer anderen Ebene parallel zur Hauptebene des Rotors angeordnet sind, wobei jeder der besagten Gurte (40, 41, 42) dedizierte Gehäuse bildet, die jeweils für jeden zweiten Magneten (1) bestimmt sind, wobei die Gehäuse zweier benachbarter Gurte winkelversetzt sind, um nicht die gleichen Magnete (1) aufzunehmen.

3. Rotor nach Anspruch 1, **dadurch gekennzeichnet, dass** er mehrere Gurte (40, 41, 42) aufweist, die jeweils in einer anderen Ebene parallel zur Hauptebene des Rotors angeordnet sind, wobei jeder der besagten Gurte (40, 41, 42) dedizierte Gehäuse bildet, die jeweils für eine Gruppe von Magneten bestimmt sind, wobei die Gehäuse zweier benachbarter Gurte winkelversetzt sind, um nicht identische Gruppen (10, 11) von Magneten (1) aufzunehmen.

4. Rotor nach Anspruch 1, **dadurch gekennzeichnet, dass** er mehrere Gurte (53, 54, 55) aufweist, die in Ebenen parallel zur Hauptebene des Rotors angeordnet sind, wobei jede der besagten Ebenen mehrere Gurte (53, 54, 55) aufweist, die ein einer Gruppe von Magneten dediziertes Gehäuse bilden, wobei die Gehäuse der Gurte zweier benachbarter Ebenen winkelversetzt sind, um nicht identische Gruppen (10, 11) von Magneten (1) aufzunehmen.

5. Rotor nach einem der Ansprüche 1 bis 4, **dadurch gekennzeichnet, dass** er einen Schrumpfring (21) aufweist, der aus einer Umreifung besteht, die aus einer Wicklung von endlosen unidirektionalen Fasern hervorgeht.

## Claims

1. Rotor with a composite structure, for axial-flow electric machines, comprising at least one stator and a rotor integral with a shaft to be driven in rotation, shaped as a disk and comprising a plurality of permanent magnets (1) carried by a composite material support (2) made integral with said shaft to be driven and consisting of a fiber-reinforced matrix, said composite material support (2) comprising peripheral housings (30) each capable of containing a magnet (1), each of said housings (30) being delimited, at least laterally, by two radial or substantially radial elements (32) and on the side of the periphery of the rotor by a segment (31) connecting said two radial or substantially radial elements (32) and against which a magnet (1) abuts by its outer edge, the rotor comprising anchoring means (22) distributed peripherally around a hole intended for the passage (20) of said shaft, and in that said radial or substantially radial elements (32), of several housings (30), adjacent or not, as well as the segments (31) which connect said radial or substantially radial elements (32) two by two, for one housing or several adjacent or non-adjacent housings, consist of at least one strap (3; 40, 41, 42; 53, 54, 55; 6, 7), resulting from the winding of continuous unidirectional fibers (F) passing between said magnets (1), on the outer edge thereof, as well as on each of said anchoring means (22), to form a collective retention of the magnets (1), **characterized in that** the anchoring means (22) consist of pins with axes parallel to that of the passage of the shaft to be driven, and are coaxially distributed.

2. Rotor according to claim 1, **characterized in that** it comprises several straps (40, 41, 42), each arranged in a di-erent plane parallel to the general plane of the rotor, each of said straps (40, 41, 42) forming dedicated housings each for every other magnet (1), the housings of two adjacent straps being angularly o-set so as not to house the same magnets (1).

3. Rotor according to claim 1, **characterized in that** it comprises several straps (40, 41, 42) each arranged in a di-erent plane parallel to the general plane of the rotor, each of said straps (40, 41, 42) forming dedicated housings each for a group of magnets, the housings of two adjacent straps being angularly o-set so as not to house identical groups (10, 11) of magnets (1).

4. Rotor according to claim 1, **characterized in that** it comprises several straps (53, 54, 55), arranged in planes parallel to the general plane of the rotor, each of said planes comprising several straps (53, 54, 55) forming a housing dedicated to a group of magnets, the housings of the straps of two adjacent planes being angularly o-set so as not to house identical groups (10, 11) of magnets (1).

5. Rotor according to any one of claims 1 to 4, **characterized in that** it comprises a reinforcing ring (21) consisting of a hoop resulting from a winding of continuous unidirectional fibers.
